# EUROPEAN PATENT SPECIFICATION

(11) **EP 4 018 099 B1**
(45) Date of publication and mention of the grant of the patent: **04.11.2026**
(21) Application number: 20765345.2
(22) Date of filing: 28.08.2020
(51) Int. Cl.: F16B 2/08, F16B 5/06, F16B 35/00, F16L 3/137, F16B 33/02, F16B 23/00, E05B 15/00, E05B 63/00, E05B 3/04

(54) **SPACER**
ABSTANDSHALTER
ENTRETOISE

(30) Priority: 04.09.2019 GB 201912717; 24.10.2019 GB 201915460; 29.11.2019 GB 201917511; 09.06.2020 GB 202008701
(43) Date of publication of application: 29.06.2022
(73) Proprietor: Rapier Star Holdings Limited, Macclesfield Cheshire SK11 9JA (GB)
(72) Inventor: DAVIDSON, Paul Anthony, Macclesfield Cheshire SK11 9JA (GB); FURNESS, David John, Macclesfield Cheshire SK11 9JA (GB); FURNESS, Mark David, Macclesfield Cheshire SK11 9JA (GB)
(74) Representative: Swindell & Pearson Limited
(86) International application number: PCT/GB2020/052078
(87) International publication number: WO 2021/044127

(56) References cited:
- EP-A1- 0 779 950
- EP-A2- 1 106 493
- WO-A1-2018/061038
- DE-A1- 102017 108 414
- DE-A1- 102017 129 644
- GB-A- 1 014 768
- JP-A- H02 129 403
- JP-B2- 6 258 154
- US-A- 4 072 393
- US-A- 4 636 104
- US-A- 5 906 140
- US-A- 5 967 482
- US-A1- 2009 087 280
- US-B2- 9 618 025

## Description

### TECHNOLOGICAL FIELD

Embodiments of the present disclosure relate to a threaded spacer. Some relate to a threaded spacer for use in a clamp assembly.

### BACKGROUND

In many applications it is necessary to maintain a spacing between two surfaces and/or to urge the two surfaces apart. Where a threaded rod extends through the two surfaces, this spacing can be achieved using two nuts mounted to the threaded rod, with each nut being threadably rotated against a respective surface.

US 4072393 A discloses an electrical connector of the resilient spring type for resiliently clamping together first and second conductors. The connector includes a frame into which a screw can be threadedly advanced. The conductor-contacting edge of the screw includes a cavity from which protrudes a coiled spring. A conductor pad has a shaft extending therefrom which is received within the coils of the spring. When the screw is tightened against the conductors, the spring is compressed. If the conductors later deform under the compressive force of the screw, the spring uncoils and forces the conductor pad to maintain a strong clamping force on the conductors.

US 9618025 B2 and US 5 906 140 A disclose screw threaded fastening components.

### BRIEF SUMMARY

According to various, but not necessarily all, embodiments there is provided a threaded spacer comprising: an inner part including an external thread and a slot with a non-circular cross section in a plane perpendicular to the screw axis of the external thread, the slot being a through hole extending along the screw axis through the inner part, and wherein the slot is configured to locate an elongate member with a corresponding non-circular cross section, such that when located in the slot the elongate member is rotatably fixed relative to the slot; and an outer part including an internal surface that comprises a threaded portion, wherein the outer part is configured to threadably rotate around the inner part. The slot includes an elongate opening extending parallel to the screw axis, which is configured to receive the elongate member from a direction perpendicular to the screw axis of the external thread. The internal surface of the outer part is an internal surface of a hole extending at least partially through the outer part. The hole extending through the outer part has a greater extent along the screw axis than the inner part, such that the whole of the inner part can be received within the hole.

The slot may have a substantially rectangular cross section.

The outer part may include one or more planar surfaces on its external surface to enable a spanner to be received thereon. The internal surface of the outer part may be substantially cylindrical.

The inner part may be substantially cylindrical.

The threaded spacer may include a stop part for securing the outer part in position relative to the inner part.

The stop part may be a nut, which is threadably rotatable around the inner part.

The outer part of the threaded spacer may include an external aperture which extends through to the internal surface of the outer part, and the aperture may be configured to receive the stop part for the threaded spacer such that when the stop part for the threaded spacer is received in the aperture, the outer part is secured in position relative to the inner part by the stop part for the threaded spacer. The stop part for the threaded spacer may be configured to engage against the external threading of the inner part.

The one or more planar portions may be provided on a bolt head, which is positioned at an end of the outer part that is substantially opposite to an entrance of the blind hole extending through the outer part.

The threaded portion may extend for at least substantially the majority of the length of the internal surface of the outer part.

According to various, but not necessarily all, embodiments there is provided an assembly including one or more of the threaded spacers of any of the preceding paragraphs, and an elongate member configured to locate in the slot.

The elongate member may include a through portion with a non-circular cross section corresponding to the non-circular cross section of the slot.

The elongate member may include one or more stop portions which extend to a greater extent than the slot in a direction perpendicular to the screw axis, such that the one or more stop portions are unable to move through the slot. The stop portion may be a bent section of the elongate member.

One of the one or more stop portions may include an tapered surface, which is configured to slidingly locate in the slot of the inner part, such that when the outer part is threadably rotated around the inner part to urge the inner part towards the stop portion, the inner part is urged outwardly by the tapered surface towards the outer part.

The hole extending through the outer part may have a greater extent along the screw axis than the inner part and the stop portion combined, such that the whole of the inner part and the stop portion can be received within the hole.

The through portion of the elongate member may have a substantially rectangular longitudinal cross section.

The assembly may further include a brace with one or more slots through which the through portion of the elongate member can extend, and the inner part of one of the one or more threaded spacers may be locatable between the brace and one of the one or more stop portions.

The elongate member may comprise a metal bar.

The elongate member may be substantially U-shaped with two arms to receive a section of conduit between the arms. The arms may be elongate. One of the arms may include a stop portion at an end of the respective arm, and the other arm may including a head at an end of the respective other arm. The head may extend outwardly from the elongate member to a greater extent than the stop portion extends outwardly from the elongate member.

The brace may include two slots, with each slot being provided for receiving a respective elongate arm of the substantially u-shaped elongate member. The head on one of the respective elongate arms may extend to a greater extent than one of the slots of the brace in a direction that is substantially perpendicular to the longitudinal axis of the other elongate arm of the elongate member.

One of the one or more stop portions and one of the one or more threaded spacers may be provided at the end of each of the two arms of the substantially u-shaped elongate member.

The brace may be a plate including two slots, with each slot being provided for receiving a respective arm of the substantially u-shaped elongate member.

The elongate member may include a flexible portion for wrapping around an object.

The elongate member may include the brace.

The assembly may include two threaded spacers of any of the preceding paragraphs, and the elongate member may include two stop portions.

The elongate member may include an overlapping portion adjacent to the brace, and the overlapping portion may be configured to extend under the flexible portion when the assembly is wrapped around an object.

The elongate member may be formed from a single sheet of material.

The elongate member may include a head and an elongate rigid portion. The head may be positioned at a longitudinal end of the elongate member, and may extend outwardly in a direction that is substantially perpendicular to the longitudinal axis of elongate rigid portion.

The elongate rigid portion may include an elongate ridge extending along at least part of the length of the elongate rigid portion, wherein the elongate ridge is of increased thickness relative to the adjacent sections of the elongate rigid portion.

A recess for locating the stop portion may be provided in the slot.

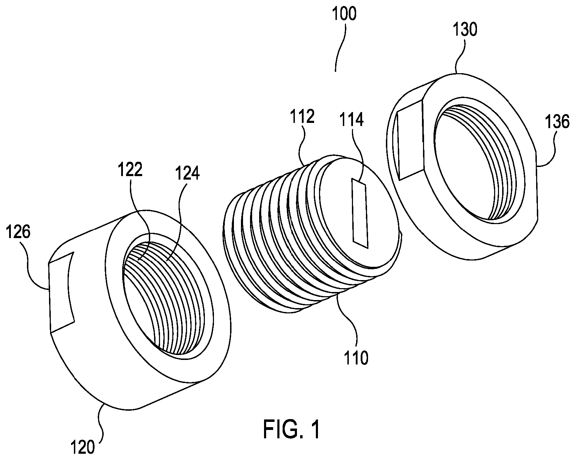

According to various, but not necessarily all, embodiments there is provided examples as claimed in the appended claims. In more detail, figures 1-2 and 14A-B do not show threaded spacers, wherein all components show all features of claim 1.

### BRIEF DESCRIPTION

Some examples will now be described with reference to the accompanying drawings in which:
FIG. 1 is a perspective view showing a first threaded spacer;
FIG. 2 is a perspective view showing a second threaded spacer;
FIG. 3A is a cross-sectional view showing an elongate member of a first assembly;
FIG. 3B is a cross-sectional view showing the elongate member of the first assembly and a conduit;
FIG. 3C is a cross sectional view showing the first assembly;
FIG. 3D is a cross sectional view showing the first assembly;
FIG. 3E is a cross sectional view showing the first assembly once secured in position;
FIG. 4A is a cross sectional view showing a second assembly;
FIG. 4B is a side view showing an elongate member of the second assembly;
FIG. 5A is a cross sectional view showing a third threaded spacer, part of an elongate member and a brace;
FIG. 5B a further cross sectional view showing the third threaded spacer, part of an elongate member and a brace;
FIG. 6A is a cross sectional view showing two of the third threaded spacers, an elongate member of a third assembly, and a conduit;
FIG. 6B is a cross sectional view showing the third assembly;
FIG. 6C shows a side view and a top view of a brace in the form of a metal plate, with the side view and the top view of the brace in the form of a metal plate being shown above two side views of a brace in the form of an angle iron;
FIG. 7A is a cross sectional view showing a fourth assembly;
FIG. 7B is a side view showing two of the fourth assemblies, with the third threaded spacers shown in cross section;
FIG. 8A is a cross sectional view showing a fifth assembly;
FIG. 8B is a cross sectional view showing an elongate member of the fifth assembly;
FIG. 8C is a top view showing the elongate member of the fifth assembly;
FIG. 9A is a cross sectional view showing a sixth assembly;
FIG. 9B is a top view showing an elongate member of the sixth assembly;
FIG. 9C is a top view showing the sixth assembly, with the third threaded spacers shown in cross section;
FIG. 10A is a cross sectional view showing a seventh assembly;
FIG. 10B is an end view showing an elongate member of the seventh assembly;
FIG. 10C is a side view showing the elongate member of the seventh assembly;
FIG. 10D is an end view showing an alternate elongate member of the seventh assembly;
FIG. 10E is a side view showing the alternate elongate member of the seventh assembly;
FIG. 11A is a cross sectional view showing an eighth assembly;
FIG. 11B is an end view showing an elongate member of the eighth assembly;
FIG. 11C is a side view showing the elongate member of the eighth assembly;
FIG. 11D is an end view showing an alternate elongate member of the eighth assembly;
FIG. 11E is a side view showing the alternate elongate member of the eighth assembly;
FIG. 12 is a perspective view showing an I-beam clamp;
FIG. 13A is a schematic cross sectional view showing an inner part of the first or second threaded spacers;
FIG. 13B is a schematic cross sectional view showing the inner part of the first or second threaded spacers and an elongate member;
FIG. 13C is a schematic cross sectional view showing an alternate inner part of the first or second threaded spacers;
FIG. 13D is a schematic cross sectional view showing the alternate inner part of the first or second threaded spacers and the elongate member;
FIG. 14A is an end view showing an inner part of a fourth threaded spacer;
FIG. 14B is a cross sectional view showing the fourth threaded spacer;
Fig. 15 is a perspective view of the eighth assembly;
Fig. 16 is a perspective view of a ninth assembly;
Fig. 17 is a side view of a tenth assembly, with a tightening arrangement shown in cross section;
Fig. 18 is a top view of the tenth assembly, with the tightening arrangement shown in cross section;
Fig. 19 is a cross sectional view of the tightening arrangement of the tenth assembly;
Fig. 20 is a top view showing a first and a second elongate member, along with inserts of the tenth assembly;
Fig. 21 is a side view showing the first and the second elongate member, along with the inserts of the tenth assembly;
Fig. 22 is a schematic cross sectional view showing an alternate stop portion;
Fig. 23 is a schematic cross sectional view of a further alternate stop portion;
Fig. 24A is a perspective view of an alternative assembly to the fourth assembly;
Fig. 24B is a perspective view of an elongate member of the alternative assembly to the fourth assembly;
Fig. 25 is a perspective view of a further assembly; and
Fig. 26 is a perspective view of an inner part of a further threaded spacer.

### DETAILED DESCRIPTION

Fig. 1 shows an apparatus in the form of a first threaded spacer 100 for use in maintaining a spacing between two surfaces and/or urging the two surfaces apart, the threaded spacer 100 including an inner part 110 and an outer part 120. The inner and outer part may be made from metal, which may be stainless steel.

The inner part 110 of the threaded spacer 100, which may be in the form of a threaded bar, includes an external thread 112. The external thread 112 is defined by a helix extending around the inner part 110, and the axis extending through the centre of the helix defines a screw axis. In this example, the inner part 110 is a substantially cylindrical shape.

The inner part 110 further includes a slot 114 with a non-circular cross section in a plane perpendicular to the screw axis of the external thread. The slot 114 is configured to locate an elongate member with a corresponding non-circular cross section, such that when located in the slot 114, the elongate member is rotatably fixed relative to the slot 114. The slot 114 is shaped to correspond to the longitudinal cross section of the elongate member, meaning that when the elongate member is rotated inside the slot 114, the inner part 110 also rotates. In other words, the inner part 110 does not rotate relative to the elongate member when the correspondingly shaped elongate member is inserted into the slot 114.

In the example of Fig. 1 the slot 114 is in the form of a through hole extending along the screw axis through the inner part 110. The slot 114 has a substantially rectangular cross section in a plane perpendicular to the screw axis to locate an elongate member with a corresponding rectangular longitudinal cross section. In other examples, the cross section of the slot 114 in a plane perpendicular to the screw axis of the slot 114 may be for instance a hexagon, a triangle, a square (i.e. a rectangle with all sides of equal length), an oval or any other non-circular shape to enable torque to be transferred to or from an elongate member with a corresponding longitudinal cross section. The non-circular shape may have at least one vertex.

The corresponding cross section of the slot 114 and the elongate member means that torque can be transferred between the elongate member and the slot 114, with the elongate member acting as a "internal spanner", which can cause or prevent rotation of the inner part 110.

The outer part 120, which in this example is in the form of an internally threaded nut, includes an internal surface 122 with a threaded portion 124 for engaging with the external thread 112 of the inner part 110. The internal surface 122 of the outer part 120 is an internal surface of a hole (a through hole in this example) extending through the outer part 120, and the threaded portion 124 of the internal surface 122 extends for substantially the majority of the length of the outer part 120. In this example, the internal surface 122 of the outer part 120 is substantially cylindrical.

The outer part 120 is configured to threadably rotate around the inner part 110. The threaded spacer 100 is therefore threadably adjustable to increase the extent of the threaded spacer 100 along the screw axis by rotating the outer part 120 around the inner part 110.

The outer part 120 includes one or more planar surfaces 126 on its external surface to enable a spanner to be received thereon and rotate the outer part 120. In the example of Fig.1 two planar surfaces 126 are provided substantially opposite to one another on the external surface of the outer part 120.

The threaded spacer 100 of Fig. 1 further includes a stop part 130 for securing the outer part 120 in position relative to the inner part 110. In the example of Fig. 1, the stop part 130 is in the form of a threaded nut, which is threadably mountable to the inner part 110. Once the outer part 120 is in a required position relative to the inner part 110, the stop part 130 can be threadably adjusted along the screw axis of the inner part 110 until the stop part 130 abuts against the outer part 120. The friction between the stop part 130 and the outer part 120 retains the outer part 120 in position relative to the inner part 110.

In the example of Fig. 1, the stop part 130 includes one or more planar surfaces 136 on its external surface to enable a spanner to be received thereon and rotate the stop part 130. In the example of Fig.1, two planar surfaces 136 are provided substantially opposite to one another on the external surface of the outer part 130. In other examples, the outer part 130 may include one or more indentations (not shown) in the outer surface of the outer part 130, at one of the longitudinal ends of the outer part 130. The longitudinal axis of the outer part 130 is defined by the screw axis of the threaded portion 124 of the internal surface 122. The one or more indentations may be provided instead of, or in addition to, the one or more planar surfaces 136. The one or more indentations are configured to enable a tool (not shown) with one or more projections that correspond to the one or more indentations to engage with and interlock with the longitudinal end of the outer part 130 and apply torque to the outer part 130.

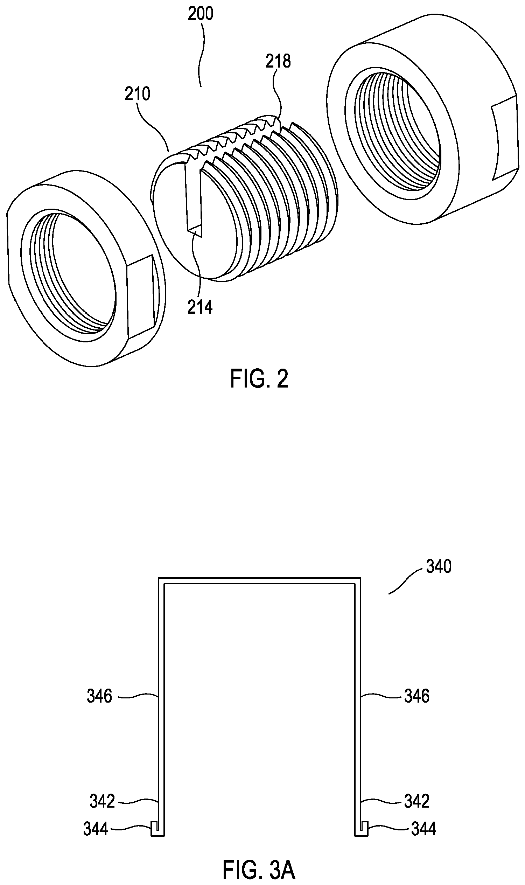

Fig. 2 shows an apparatus in the form of a second threaded spacer 200, which is similar to the first threaded spacer 100 of Fig. 1. Similarly to the inner part 110 of the first threaded spacer 100, the inner part 210 of the second threaded spacer includes a slot 214, which is in the form of a through hole with a substantially rectangular cross section in a plane perpendicular to the screw axis of the external thread 212 of the inner part 210.

However, in the example of Fig. 2 the slot 214 of the inner part 210 includes an elongate opening 218 extending parallel to the screw axis, which is configured to receive an elongate member with a corresponding longitudinal cross section from a direction perpendicular to the screw axis of the external thread 212. The elongate opening 218 is present in the surface comprising the external thread 212. The slot 214 of the second threaded spacer 200 therefore enables a correspondingly shaped elongate member to be received in the slot from a direction either parallel to the screw axis or perpendicular to the screw axis.

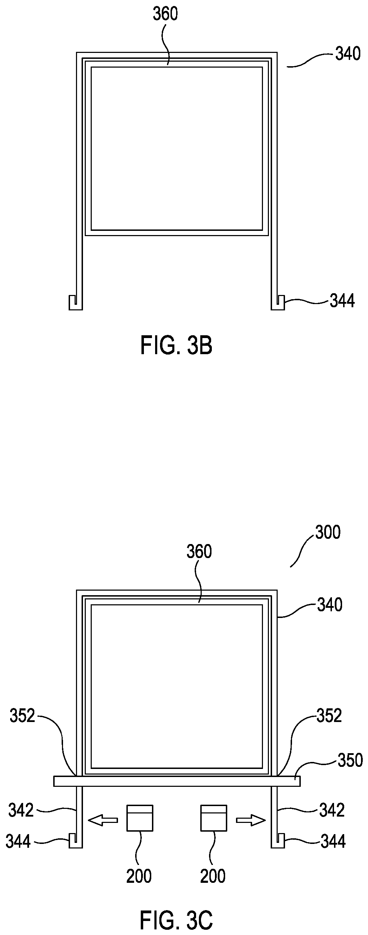

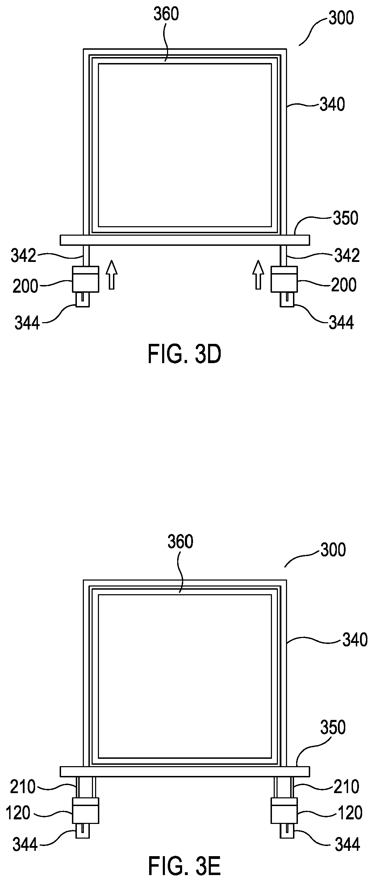

Figs 3A to 3E illustrate the formation of a first assembly 300 including two second threaded spacers 200, an elongate member 340 configured to locate in the slot 214 of each of the threaded spacers 200, and a brace 350. The first assembly 300 is for supporting a conduit 360, which in the example of Figs. 3B - 3E is a conduit 360 with a square longitudinal cross section, which may for instance be a duct. A cross section of the conduit 360 is shown in Figs. 3B to 3E.

The elongate member 340, best shown in Fig. 3A, includes a through portion 342 with a non-circular longitudinal cross section corresponding with the non-circular cross section of the slots 214 of the threaded spacers 200. The through portion 342 is a portion of the elongate member 340 that is shaped to extend through one of the slots 214. In this example, the longitudinal cross section of the through portion 342 is substantially rectangular. This enables the through portion 342 to be slidingly received in the slot 214 of each threaded spacer 200. The elongate member 340 further includes one or more protruding stop portions 344 which extend to a greater extent than the slot 214 of the threaded spacers 200 in a direction perpendicular to the screw axis of the external thread 212, such that the one or more stop portions 344 are unable to move through the slot 214.

In the illustrated example of Figs. 3A to 3E, the elongate member 340 is in the form of a rectangular bar. The elongate member 340 is substantially U-shaped with two arms 346 to receive a section of a conduit 360 between the arms 346. A stop portion 344 is provided at each end of the bar, which may be in the form of a bent section of bar. In this example, each end of the bar is bent 180°, such that the stop portion 344 is double the thickness of the through portion 342.

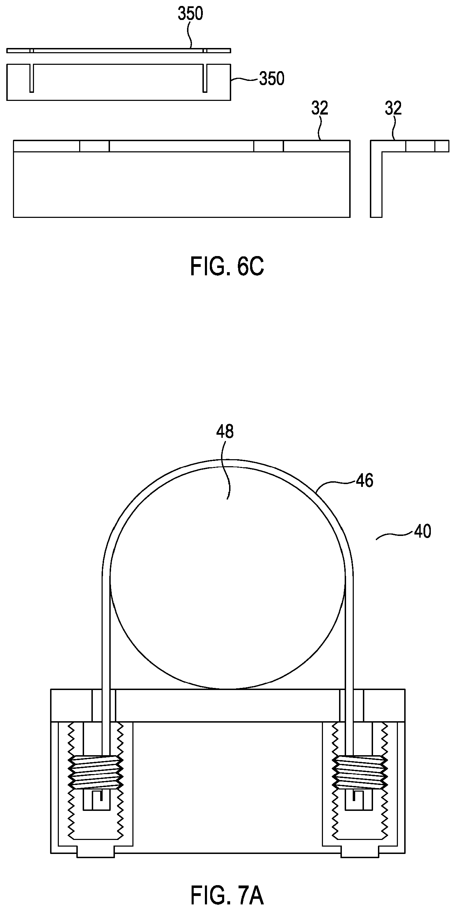

The brace 350 includes one or more slots 352 through which the through portion 342 of the elongate member 340 can extend. In this example, the brace 350 is in the form of a flat plate with two slots 352. The brace 350 is also shown in Fig. 6C. The slots 352 are spaced to enable a respective arm 346 of the elongate member 340 to pass through each respective slot 352. One or more of the threaded spacers 200 are locatable between the brace 350 and one of the one or more stop portions 344, to space the brace 350 from the one or more stop portions 344. In this example, the brace 350 does not form part of the elongate member 340. The brace 350 may be a metal plate, which could for instance be made from steel. The brace 350 may alternatively be for instance an angle iron or an I-beam.

As illustrated in Figs. 3A to 3E, in use, the conduit 360 is inserted between the arms 346 of the elongate member 340. Each arm 346 of the elongate member 340 is inserted into a respective slot 352 of the brace 350. The inner part 210 of the threaded spacer 200 is located on the elongate member 340 between the brace 350 and the stop portion 344 from a direction perpendicular to the screw axis of the external thread 212 via the elongate opening 218. The outer part 120 is then inserted onto the elongate member 340 and over the stop portion 344 via the hole extending through the outer part 120. In this example, a threaded spacer 200 is located on each respective arm 346 of the elongate member 340 between the brace 350 and the respective stop portion 344.

Each threaded spacer 200 is then threadably adjusted to space the brace 350 from the respective stop portion 344, as shown in Fig. 3D to 3E. The threaded spacer 200 can be adjusted using only a single spanner on the outer part 220, as the inner part 210 is secured in position by the elongate member 340 inserted therein. As the inner and outer parts 210, 220 are threadably adjusted and moved further away from one another, the space between the stop portion 344 and the brace 350 is filled by the threaded spacer 200. This means that as the inner and outer parts 210, 220 are threadably adjusted and moved further away from one another, the joint between the elongate member 340 and the brace 350 becomes more secure. This secures the conduit 360 within the first assembly 300.

To further secure the assembly 300 and threaded spacer 200, the stop part 130 of the threaded spacer 200 can be threadably adjusted along the screw axis of the inner part 210, until the stop part 130 abuts against the outer part 120.

Once assembled, one of the one or more stop portions 344 and one of the one or more threaded spacers 200 are provided at the end of each of the two arms 346 of the substantially u-shaped elongate member 340.

In other examples, the threaded spacer 200 could be located on the elongate member 340 prior to the bending the ends of the elongate member 340 to provide the stop portion 344. This enables the first threaded spacer 100 to be used in the first assembly 300, as the inner part 110 can be slidingly located onto the elongate member 340 when the stop portions 344 are not present.

The first assembly 300 can be used to replace the well-known U-bolt, and the first assembly 300 provides a number of advantages relative to the U-bolt. For instance, a U-bolt includes an elongate member with a circular longitudinal cross section and threaded ends to enable nuts to be located thereon. A circular longitudinal cross section elongate member applies a load onto a single point (at a single point on the circumference of the circular cross section elongate member) of the conduit located therein, which can damage the conduit. The threaded spacers described herein enable the use of an elongate member with a rectangular longitudinal cross section, which means that the load can be spread across the whole of the face of the rectangle adjacent to the conduit 360. In addition, an elongate member 340 with a rectangular cross section provides a significant saving in materials, and also requires significantly less energy to bend into a u-shape.

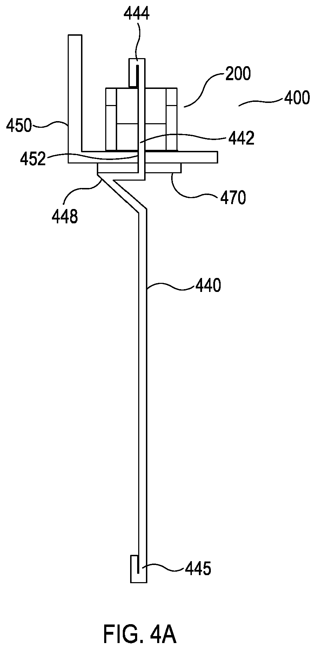

Fig. 4A shows a second assembly 400 for mounting an elongate member 440 to a support. The second assembly 400 operates in a similar manner to the first assembly 100, but only a single threaded spacer 200 is provided.

The elongate member 440 of the second assembly 400 includes a first protruding stop portion 444 at a first end, and an intermediate protruding stop portion 448 along the length of the elongate member 440. A through portion 442 is provided between the first stop portion 444 and the intermediate stop portion 448. The through portion 442 is a portion of the elongate member 440 that is shaped to extend through the slot 214 of the threaded spacer 200. In example, the intermediate stop portion 448 is in the form of a bend, which defines a projection extending outwardly from the longitudinal axis of the elongate member 440. At the opposite longitudinal end of the elongate member 440 to the first stop portion 444, a second protruding stop portion 445 is provided, which could for instance be used to support an item such as a cable tray.

A brace 450 of the second assembly 400 may for instance be in the form of an angle iron with a slot 452. In use, the threaded spacer 200 and the brace 450 are located between the first stop portion 444 and the intermediate stop portion 448, with the through portion 442 of the elongate member 440 extending through the slot 452 of the brace 450. The threaded spacer 200 can then be threadably adjusted to space the first stop portion 444 from the brace 450, and secure the elongate member 440 to the brace 450. Once the elongate member 440 is mounted to the brace 450 in the form of a support beam, the elongate member 440 can be used to hang or support items such as a cable tray.

In the example of Fig. 4A, a washer 470 is provided between the intermediate stop portion 448 and the brace 450. The washer 470 may be used to space the intermediate stop portion 448 from the brace 450 and/or to prevent the intermediate stop portion 448 from passing through the slot 452 in the brace 450.

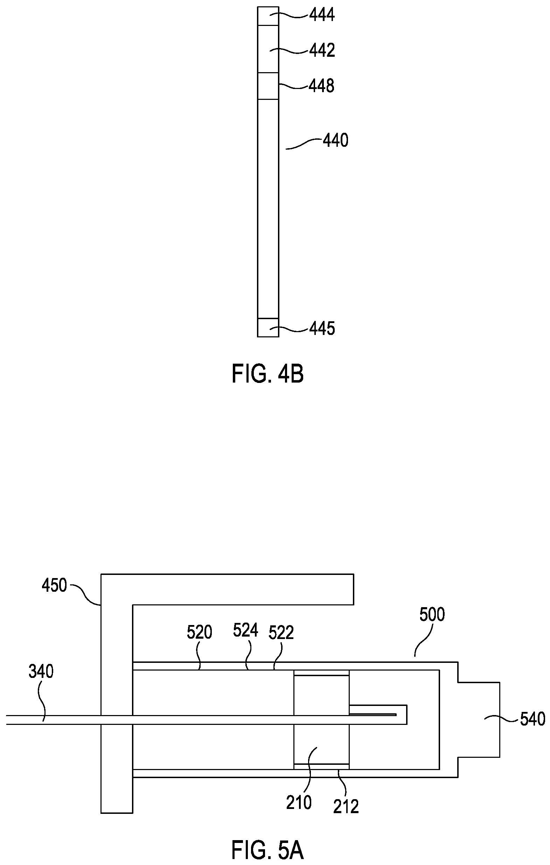

Fig. 4B shows a side view of the elongate member 440 of Fig. 4A.

Fig. 5A shows an apparatus in the form of a third threaded spacer 500, and part of the elongate member 340 of the first assembly 300 extending through the brace 450 of the second assembly 400. In this example, the inner part 210 of the third threaded spacer 500 is substantially the same as the inner part 210 of the second threaded spacer 200, but the inner part 110 of the first threaded spacer 100 could also be used in the third threaded spacer 500.

An outer part 520 of the third threaded spacer 500, which in this example in the form of an internally threaded nut, includes an internal surface 522 with a threaded portion 524 for engaging with the external thread 212 of the inner part 210. The outer part 520 is configured to threadably rotate around the inner part 210.

The internal surface 522 of the outer part 520 is an internal surface of a hole extending through the outer part 520. The hole extending through the outer part 520 has a greater extent along the screw axis than the inner part 210, such that the whole of the inner part 210 can be received within the hole. The hole extending through the outer part 520 is a blind hole for preventing the elongate member 340 from extending fully through the outer part 520.

The outer surface of the outer part 520 is substantially cylindrical.

As shown in Fig. 5A, the blind hole extending through the outer part 520 has a greater extent along the screw axis than the inner part 210 and the stop portion 344 combined, such that the whole of the inner part 210 and the stop portion 344 can be received within the hole.

In this example, the outer part 520 includes a bolt head 540, which includes one or more planar portions 526 for receiving a spanner thereon. The bolt head 540 is positioned at an end of the outer part 520 that is substantially opposite to an entrance 528 of the blind hole extending through the outer part 520.

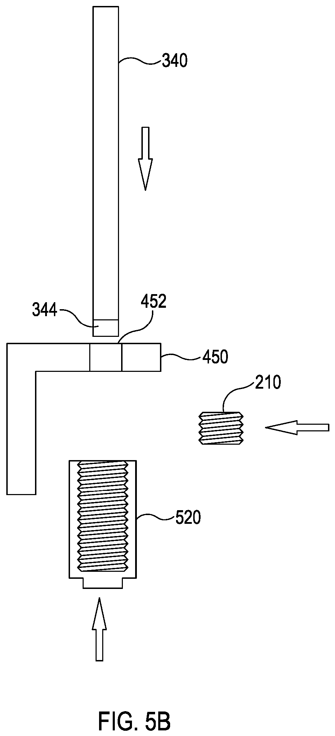

As demonstrated in Fig. 5B, in use, the elongate member 340 is inserted into the slot 452 of the brace 450. The inner part 210 is then located on the elongate member 340 between the stop portion 344 of the elongate member 340 and the brace 450. The third threaded spacer 500 is threadably adjustable to increase the extent of the threaded spacer 500 along the screw axis from an end of the inner part 210 to an end of the outer part 520. To threadably adjust the third threaded spacer 500, the outer part 520 is threadably rotated around the inner part 210 until the outer part 520 engages against the brace 450, and the inner part 210 engages against the stop portion 344. Once the outer part 520 engages against the brace 450, and the inner part 210 engages against the stop portion 344, further threadable rotation of the outer part 520 causes the stop portion 344 and the brace 450 to be urged apart.

The third threaded spacer 500 may include sealing means (not shown) for preventing ingress of foreign materials into the spacer 500. For instance, the sealing means may be an oil or lubricant that is locatable between the outer part 520 of the threaded spacer 500 and the brace 450.

The third threaded spacer 500 can be used in hygienic environments, such as in food, chemical or pharmaceutical industries. The blind hole of the outer part 520 means that foreign materials such as dirt or bacteria cannot enter the threaded spacer 500 once secured to the brace 450.

Furthermore, the blind hole of the outer part 520 means that any lubricant located on the threading inside the blind hole is unable to exit the blind hole when the threaded spacer 500 is secured to the brace 450. The lubricant is therefore protected by the outer part 520, ensuring that the thread of the threaded spacer 500 is well lubricated at all times, and that the threaded spacer 500 can be easily removed at a later date. This can be useful in outdoor environments.

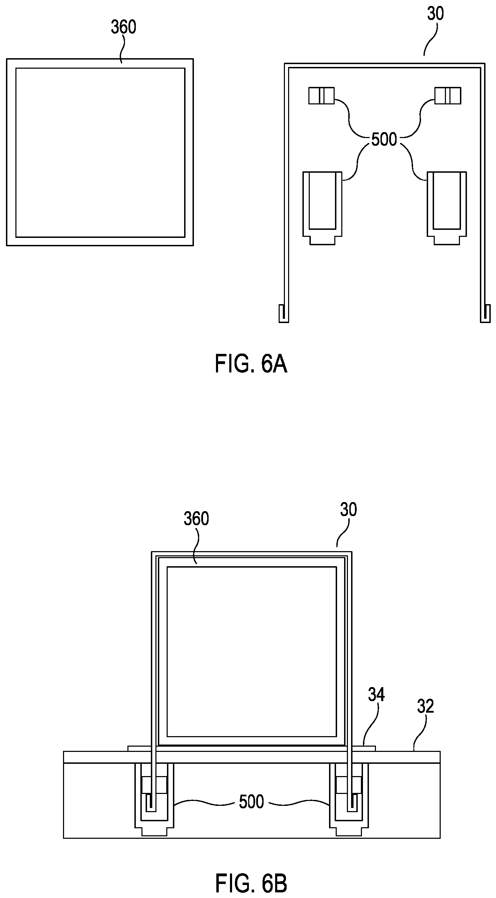

Figs. 6A and 6B show a third assembly 30 in a partial exploded view and as assembled respectively. The third assembly 30 is similar to the first assembly 300, but includes the third threaded spacer 500, rather than the second threaded spacer 200. The brace 32 of the third assembly 30 is in the form of an angle iron, rather than a flat plate as is the case in the first assembly 300.

The third assembly 30 also includes a pad 34 for location between the conduit 360 and the brace 32, to prevent damage to the conduit 360 from excessive clamping forces.

Fig. 6C shows top and side views of the brace 350 in the form of a flat plate, and two side views of the brace 32 in the form of an angle iron.

Fig. 7A illustrates a fourth assembly 40, which is similar to the third assembly 30, but the elongate member 46 is formed in a curved u-shape, rather than the right-angled u-shape of the third assembly 30. This enables a cylindrical conduit 48 to be received within the assembly 40 once assembled. The fourth assembly 40 does not include the pad 34 in this example.

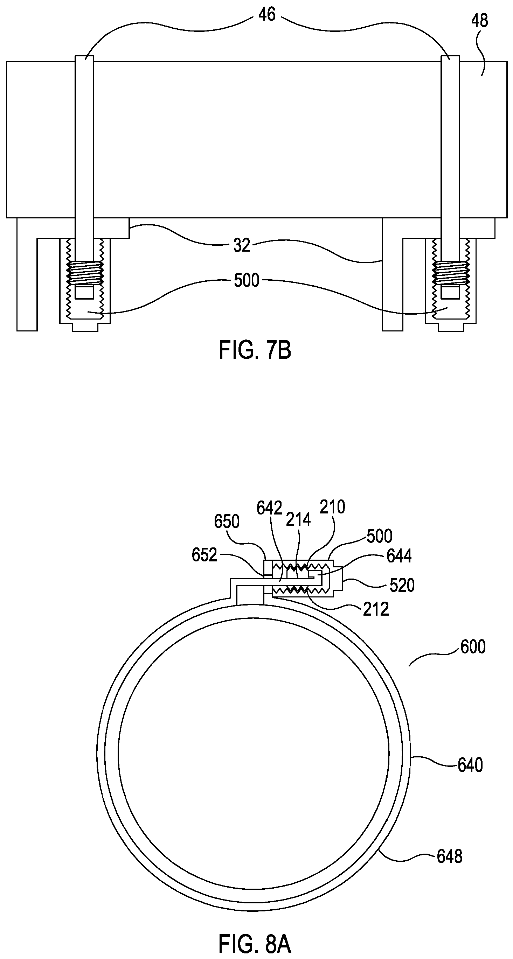

Fig. 7B shows a side view of two fourth assemblies 40, with the third threaded spacers 500 shown in cross section. The two fourth assemblies 40 are used to secure a cylindrical conduit to the braces 32, which are in the form of angle irons.

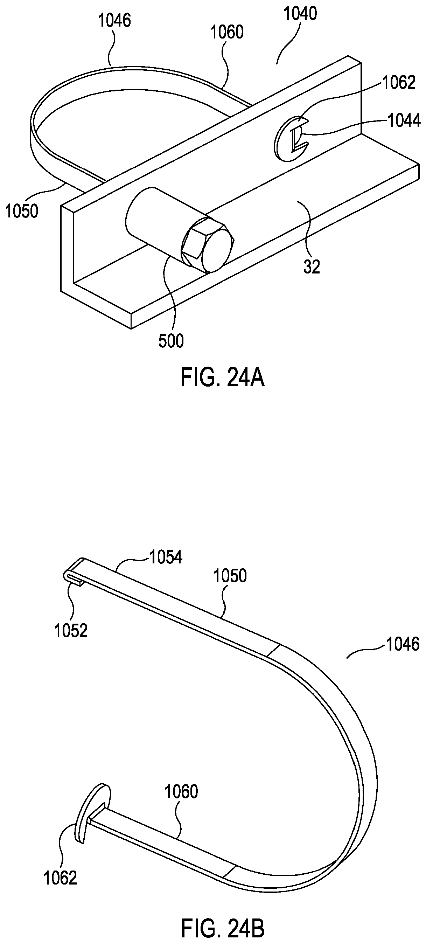

Fig. 24A illustrates an alternative assembly 1040 to the fourth assembly 40, which comprises a single threaded spacer 500 and a substantially u-shaped elongate member 1046. Fig. 24A shows the assembly 1040 mounted to a brace 32, which in this example is in the form of an angle iron. The brace 32 includes two slots 1044 for receiving the elongate member 1046, which in this example are in the form of circular holes.

The end of the first arm 1050 of the substantially u-shaped elongate member 1046 is similar to that of the elongate member 46 of the fourth assembly 40, with a stop portion 1052 and a through portion 1054 for receiving the inner part 210 of the threaded spacer 500. However, the end of the second arm 1060 of the elongate member 1046 includes a head 1062, which extends outwardly from the elongate member 1046 to a greater extent than the stop portion 1052. The elongate member 1046 is best shown in Fig. 24B.

The head 1062 extends outwardly in a direction that is substantially perpendicular to the longitudinal axis of the elongate second arm 1060 of the elongate member 1046. The head 1062 extends outwardly to a greater extent than one or more of the slots 1044 in the brace 32, to prevent the head 1062 from passing through one or more of the slots 1044 in the brace 32.

In this example, the head 1062 provides a substantially flat surface 1066 which is substantially perpendicular to the longitudinal axis of the adjacent elongate second arm 1060 of the elongate member 1046. The substantially flat surface 1066 may be substantially circular with a cutaway section at one side of the circle, with the cutaway section being substantially rectangular in shape.

In this example, the head 1062 is integral with the elongate member 1046, the head 1062 being connected to the elongate member 1062 by a 90° bend in a single sheet of material. In the example of Figs 24A and 24B, the elongate member 1046 is formed from a single sheet of metal, by cutting and bending the sheet of metal. This provides for simple and low-cost manufacture. The metal may be steel.

In use, the end of the first arm 1050 is inserted into a first slot 1044 in the brace 32. The stop portion 1052 at the end of the first arm 1050 is smaller than the first slot 1044 in the brace 32, and can thus pass through the first slot 1044. The elongate member 1046 is then fed through the slot 1044 of the brace 32 until the stop portion 1052 passes through the second slot 1044 (hidden in Fig. 24A) of the brace 32, and the head 1062 of the second arm 1060 abuts against the portion of the brace 32 around the first slot 1044.

The inner part 210 is then located on the through portion 1054 of the first arm 1050 between the stop portion 1052 of the first arm 1050 and the brace 32. The outer part 520 is then threadably rotated around the inner part 210 until the outer part 520 engages against the brace 32, and the inner part 210 engages against the stop portion 1052. Once the outer part 520 engages against the brace 32, and the inner part 210 engages against the stop portion 1052, further threadable rotation of the outer part 520 causes the stop portion 1052 and the brace 32 to be urged apart. This causes a section of pipe or conduit (not shown) located between the elongate member 1046 and the brace 32 to be secured against the brace 32.

The alternative assembly 1040 to the fourth assembly 40 provides the advantage that only one threaded spacer 500 is required to secure a section of conduit to the brace 32, thereby reducing the amount of materials and labour required.

Fig. 8A illustrates a fifth assembly 600 for clamping an object, which includes the third threaded spacer 500 and an elongate member 640. The fifth assembly 600 is for clamping a conduit or sealing an end of a hose to an end of a pipe.

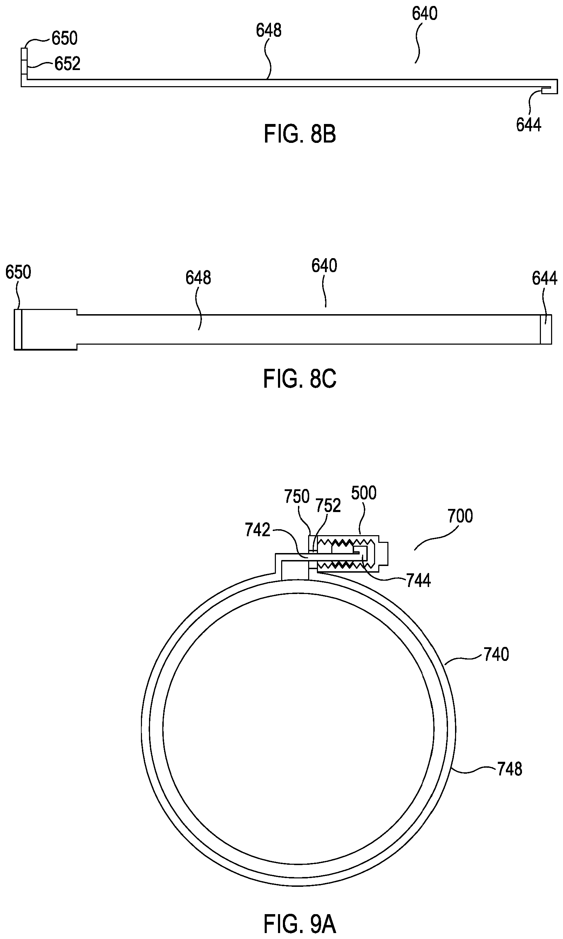

The elongate member 640, also shown in Figs. 8B and 8C, includes a through portion 642 with a non-circular longitudinal cross section corresponding with the non-circular cross section of the slot 214 of the threaded spacer 500. The through portion 442 is a portion of the elongate member 640 that is shaped to extend through the slot 214 of the threaded spacer 500. In this example, the longitudinal cross section of the through portion 642 is substantially rectangular. This enables the through portion 642 to be slidingly received in the slot 214 of the threaded spacer 500. The elongate member 640 further includes a protruding stop portion 644 which extends to a greater extent than the slot 214 of the threaded spacer 500 in a direction perpendicular to the screw axis of the external thread 212 (i.e. perpendicular to the longitudinal axis of the elongate through portion 642), such that the stop portion 644 is unable to move through the slot 214 of the inner part 210. The stop portion 644 is in the form of a bent section of the elongate member 640. In this example, the end of the elongate member 640 is bent 180° (i.e. folded over), such that the stop portion 644 is double the thickness of the adjacent through portion 642.

The elongate member 640, shown best in Figs. 8B and 8C, includes a brace 650, which is provided at substantially an opposite end of the elongate member 640 to the stop portion 644. The brace 650 is a rigid portion of the elongate member with a slot 652 for locating the through portion 642 of the elongate member 640.

The elongate member 640 includes a flexible portion 648 between the through portion 642 and the brace 650. The flexible portion 648 is for wrapping around at least part of an object such as a conduit or hose. The flexible portion 648 is elongate. In this example, the flexible portion 648 is in the form of a metal band.

In use, the flexible portion 648 is wrapped around an object, then the through portion 642 of the elongate member 640 is inserted into the slot 652 of the brace 650. The inner part 210 is then located on the through portion 642 of the elongate member 640 between the stop portion 644 of the elongate member 640 and the brace 650. The outer part 520 is then threadably rotated around the inner part 210 until the outer part 520 engages against the brace 650, and the inner part 210 engages against the stop portion 644. Once the outer part 520 engages against the brace 650, and the inner part 210 engages against the stop portion 644, further threadable rotation of the outer part 520 causes the stop portion 644 and the brace 650 to be urged apart. This causes the flexible portion 648 to tighten around the object.

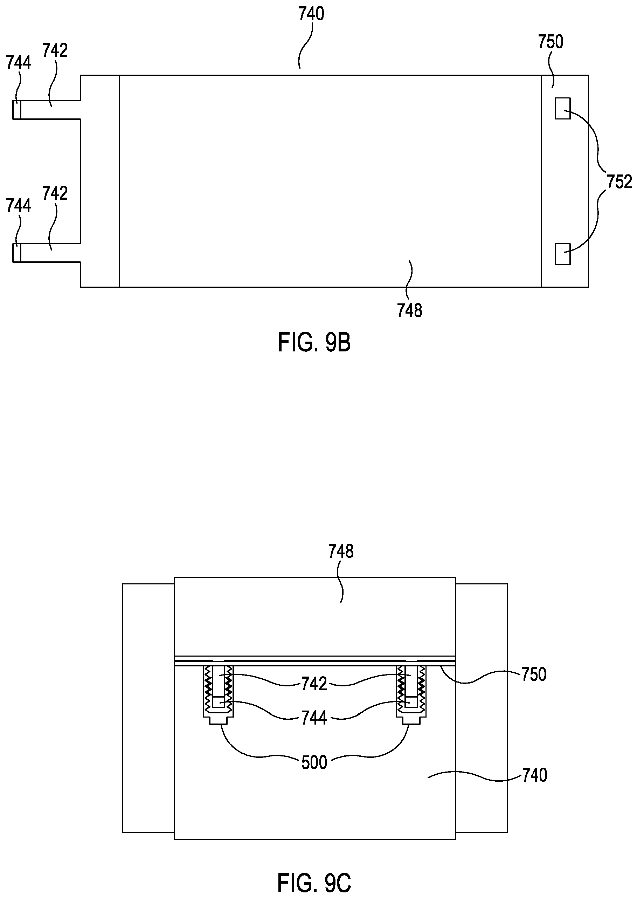

Figs. 9A to 9C illustrate a sixth assembly 700 for connecting two conduits or hoses end to end, which is similar to the fifth assembly 600, but includes a wider elongate member 740 (best shown in Fig. 9B). The flexible portion 748 of the elongate member 740 is wider than that of the fifth assembly 600, which means that pressure can be applied by the assembly 700 across a greater area. To ensure pressure is applied over a greater area, the elongate member 750 includes two threaded spacers 500, two spaced through portions 742, a stop portion 744 at an end of each through portion 742, and two spaced slots 752 in the brace 750.

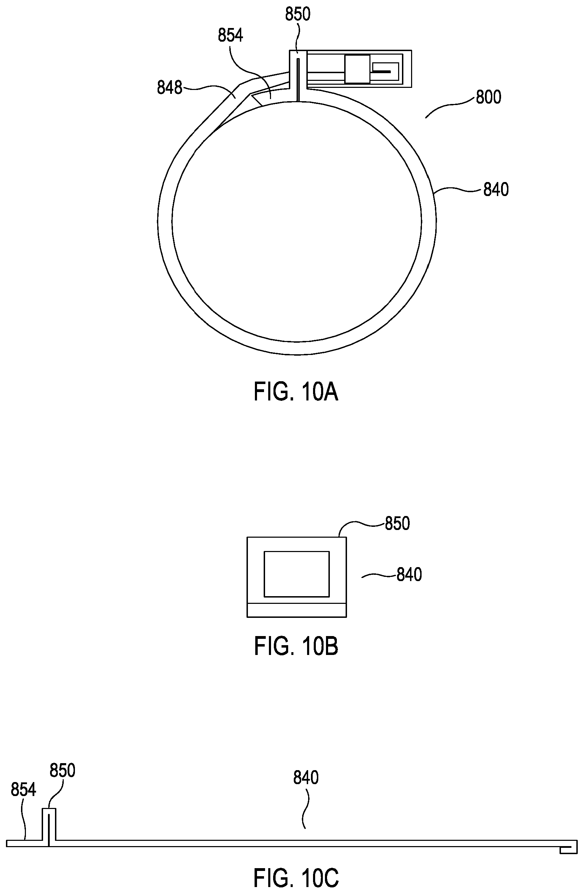

Figs. 10A to 10C illustrate a seventh assembly 800 for clamping an object such as a hose, which is similar to the fifth assembly 600, but the elongate member 840 includes an overlapping portion 854 adjacent to the brace 540. The overlapping portion 854 is configured to extend underneath the flexible portion 848 when the flexible portion 848 is wrapped around the object, such that the flexible portion 848 urges the overlapping portion 854 towards the object. This ensures that pressure is applied around substantially the whole circumference of the object. In this example, the overlapping portion 854 is in the form of a metal band.

In this example, the brace 850 of the elongate member 840 is formed from a bent section of the elongate member 840, such that the brace 850 is substantially double the thickness of the adjacent sections of the elongate member 840. The bent section is formed by bending the elongate member 840 90° clockwise at a first point along the length, then 180° anticlockwise at a further point along the length, and finally 90° at a yet further point along the length.

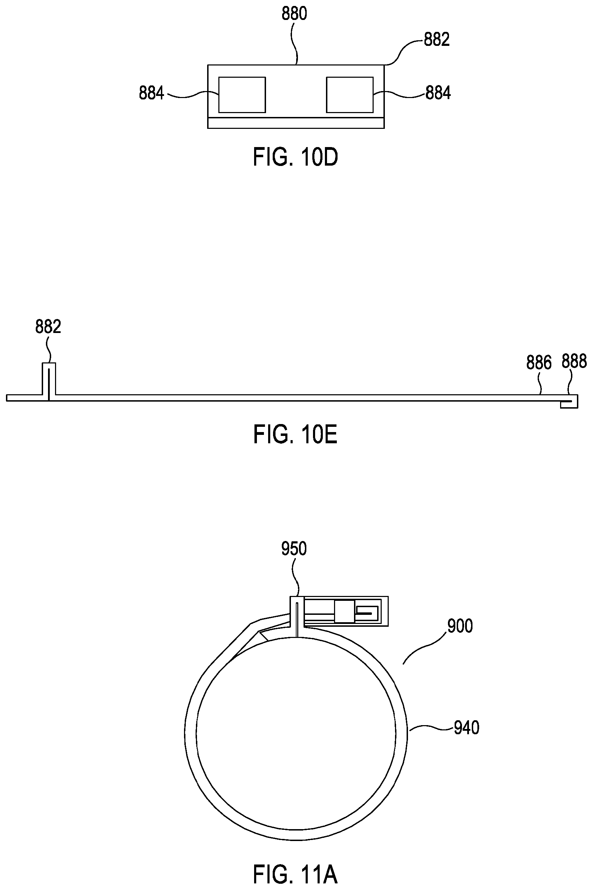

Figs. 10D and 10E show a wider elongate member 880 including a brace 882 with two spaced slots 884, two spaced through portions 886, and a stop portion 888 at an end of each through portion 886. The elongate member 880 can be used for instance in the sixth assembly 700 in place of the elongate member 740.

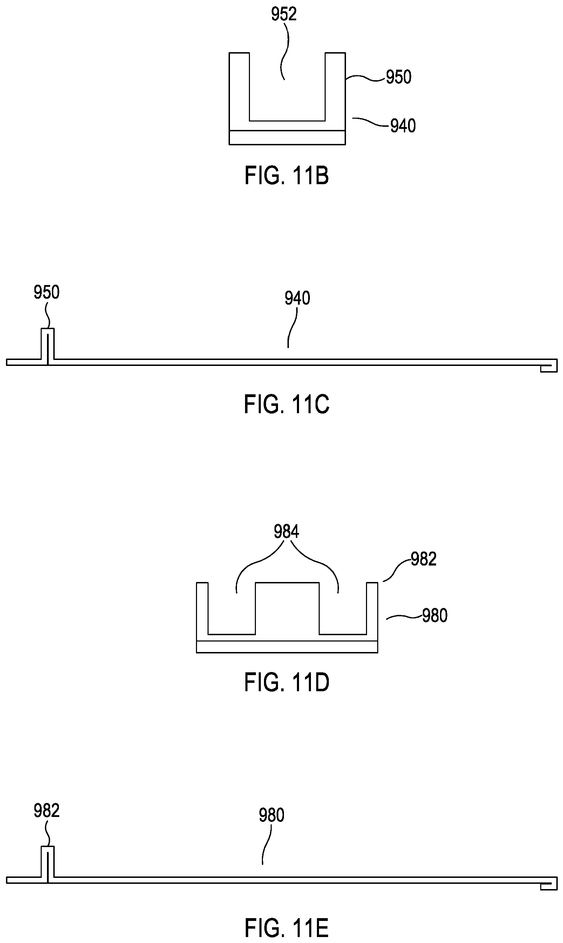

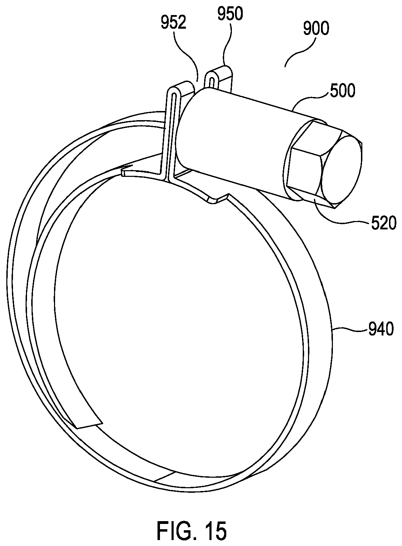

Figs. 11A to 11C illustrate an eighth assembly 900 for clamping an object such as a hose. The assembly 900 and elongate member 940 are similar to those of the Figs. 10A to 10C, but the slots 952 in the brace 950 are in the form of slots with a side opening. The slots 952 with a side opening may be formed by making two spaced cuts downwardly into the brace 950, and bending the material to one side. This provides a smooth surface at the bottom of the slot 952. The eighth assembly 900 is shown in perspective view in Fig. 15.

Figs. 11D and 11E show a wider elongate member 980, which is similar to that of Figs. 10D and 10E, but the slots 984 in the brace 982 are in the form of slots with a side opening. Each of the slots 984 with a side opening may be formed by making two spaced cuts downwardly into the brace 982, and bending the material to one side. This provides a smooth surface at the bottom of each slot 984. The elongate member 980 can be used for instance in the sixth assembly 700 in place of the elongate member 740.

The fourth to eighth assemblies 600, 700, 800, 900 can be used to replace the well-known jubilee clip or hose clamp, and the fourth to eighth assemblies 600, 700, 800, 900 provide a number of advantages. For instance, a jubilee clip includes a number of serrations to engage with a worm drive. These serrations weaken the clip, and also cut into a hose received in the clamp, which can damage the hose. The fourth to eighth assemblies 600, 700, 800, 900 do not require such serrations, and are reusable. Further, the overlapping portion of the seventh and eighth assemblies ensures that pressure is applied evenly around substantially the whole circumference of the object received therein, which may be a hose. The elongate members of the fourth to eighth assemblies 600, 700, 800, 900 may be formed from a single sheet of material, which may be sheet steel.

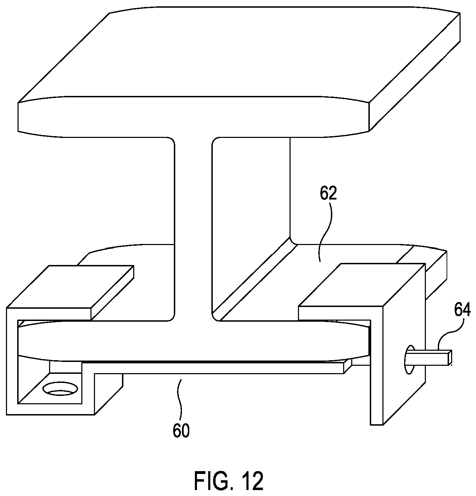

Fig. 12 shows a clamp 60 for an I-beam 62, which can be used to hang objects from the I-beam 62. The clamp 60 includes an elongate member 64, which can be bent at one end to form a protruding stop portion and a through portion. The clamp can be used in combination with any of the threaded spacers 100, 200, 500 to form an assembly for clamping an I-beam.

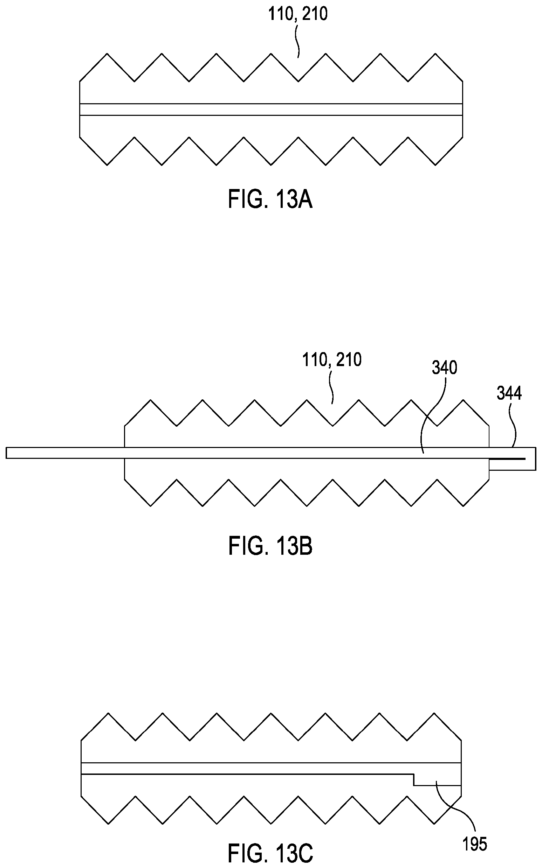

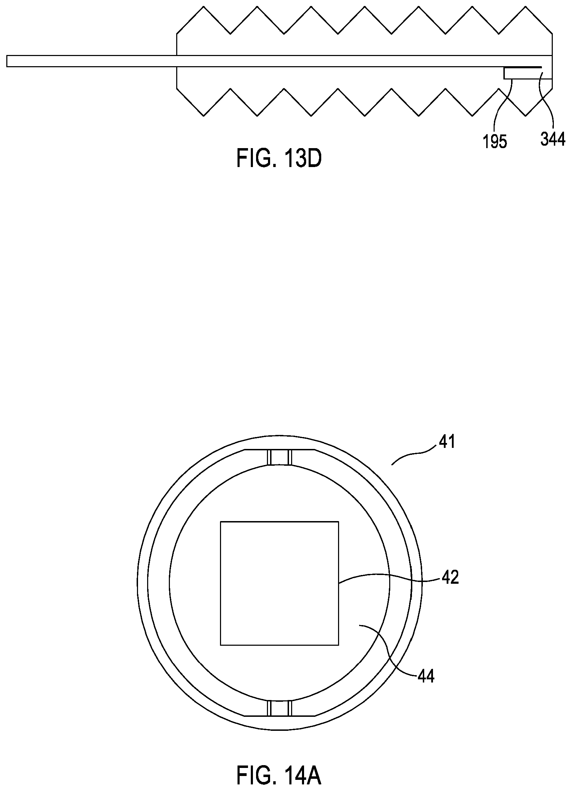

Figs. 13A and 13B schematically show the inner part 110, 210 of the threaded spacers 100, 200, 500 and part of an elongate member 340. If excessive force is applied to the elongate member 340, this can cause the stop portion 344, which is a bent portion of the elongate member 340, to unfurl. A recess 195 may therefore be provided in the slot 114, 214 of the inner part 110, 210 for locating the stop portion 344 of the elongate member 340, in order to prevent the stop portion 344 unfurling under excessive pressure. The recess 195 is shown most clearly in Figs. 13C and 13D.

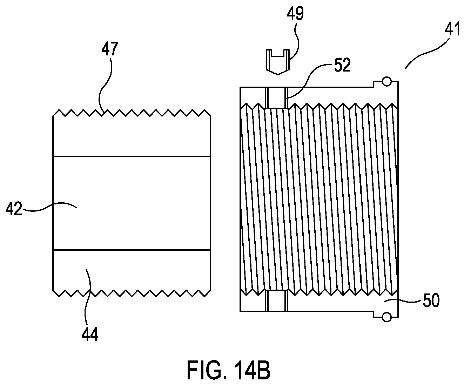

Figs. 14A and 14B illustrate a fourth threaded spacer 40, which is similar to the first threaded spacer 100, but includes a slot 42 with a substantially square cross section in a plane perpendicular to the screw axis of the external thread 47 of the inner part 44. The fourth threaded spacer also includes a different stop part 49 for securing the outer part 50 in position relative to the inner part 44.

The outer part 50 of the fourth threaded spacer 40 includes an external aperture 52 which extends through to the internal surface 54 of the outer part 50. The external aperture 52 is configured to receive the stop part 49 for the fourth threaded spacer, such that when the stop part 49 for the fourth threaded spacer 40 is received in the aperture 52, the outer part 50 is secured in position relative to the inner part 44 by the stop part 49 for the fourth threaded spacer 40.

The stop part 49 for the fourth threaded spacer 40 is configured to engage against the external threading 47 of the inner part 44. The stop part 49 may be in the form of a grub screw, and the external aperture 52 may be threaded to receive the grub screw.

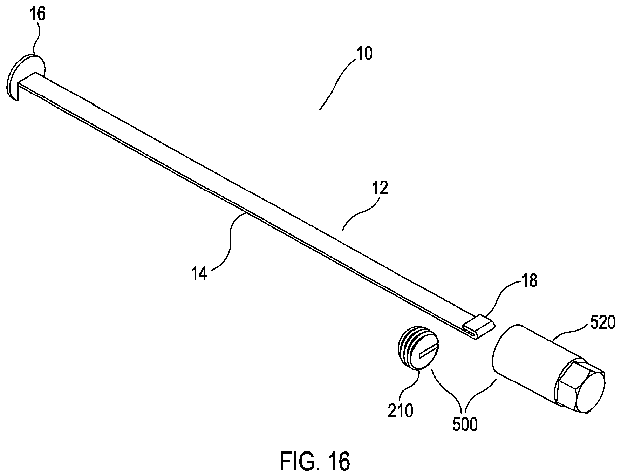

Fig. 16 illustrates a ninth assembly 10, which is for fastening metal to wood, and can for instance be used instead of a coach/carriage bolt. The ninth assembly 10 includes the third threaded spacer 500 and an elongate member 12. The elongate member 12 includes an elongate rigid portion 14, a head 16, and a protruding stop portion 18.

The elongate rigid portion 14 is a through portion with a non-circular longitudinal cross section corresponding with the non-circular cross section of the slot 214 of the third threaded spacer 500. In this example, the elongate rigid portion 14 has a rectangular longitudinal cross section.

The head 16 is positioned at a longitudinal end of the elongate member 12, and extends outwardly in a direction that is substantially perpendicular to the longitudinal axis of elongate rigid portion 14. In this example, the head 16 provides a substantially flat surface which is substantially perpendicular to the longitudinal axis of elongate rigid portion 14. In this example, the head 16 is integral with the elongate rigid portion 14, the head 16 being connected to the elongate rigid portion by a 90° bend in a single sheet of material. Further, the stop portion 18 is a bent section of the elongate member 12, where the elongate member 12 is bent substantially 180°.

In the example of Fig. 16, the head 16, the elongate rigid portion 14 and the stop portion 18 are formed from a single sheet of steel, by cutting and bending the sheet of steel. This provides for simple and low-cost manufacture.

In use, the stop portion 18 and elongate rigid portion 14 are passed through a hole in a sheet of metal and also an elongate through hole in a piece of wood. Once the stop portion 18 has passed through the holes, the threaded spacer 500 is mounted to the elongate member 12 adjacent to the stop portion 18. The threaded spacer 500 can then be threadably adjusted to pull the elongate rigid portion 14 through the hole in the wood towards the threaded spacer 500. This causes the head 16 on the opposite side of the piece of wood to move towards the sheet of metal adjacent and the piece of wood, and causes the head 16, which is too large to pass through the holes, to abut against the sheet of metal, thereby securing the sheet of metal against the wood.

In some, but not necessarily all embodiments, an alignment part (not shown) can be provided in the ninth assembly 10. The alignment part is similar to the inner part 210 of the threaded spacer, but might not include external threading. The alignment part may for instance have a smooth external surface, or include external ridges rather than external threading. The alignment part is locatable on the elongate member 12 adjacent the head 16. The alignment part is locatable in a hole (for instance the elongate hole in the piece of wood) and can abut against the internal walls of the hole. The alignment part is for centralising the elongate rigid portion 14 of the elongate member 12 within the hole, to prevent the elongate rigid portion 14 moving around within the hole. The elongate member 12 may include an intermediate stop portion (not shown) to retain the alignment part in position adjacent to the head 16 and prevent the alignment part from moving down the elongate rigid portion 14. The intermediate stop portion may be substantially the same as the intermediate stop portion 448 of the elongate member 440 of the second assembly 400.

The ninth assembly 10 can be used in place of the well-known coach bolt (or carriage bolt), and provides a significant saving in both material and weight relative to a coach bolt, whilst maintaining the necessary strength.

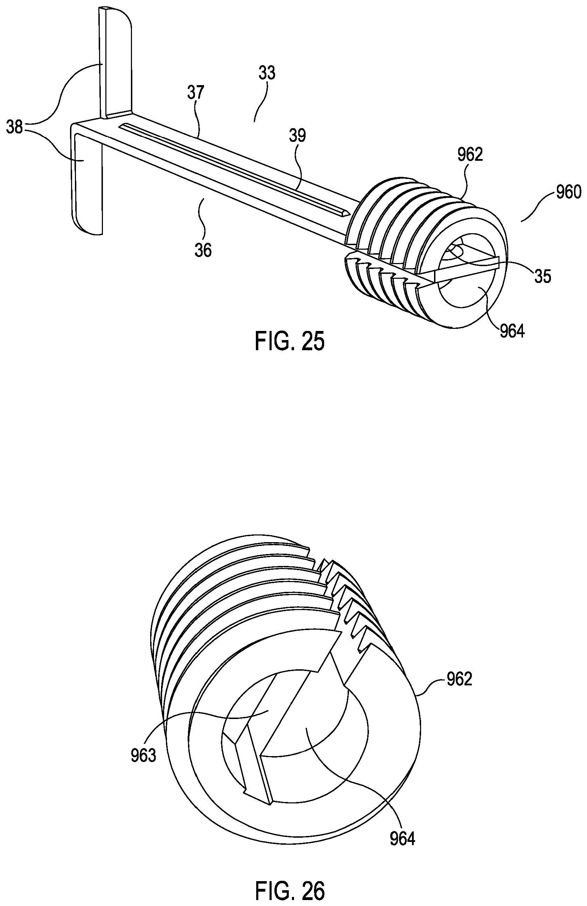

Fig. 25 shows a further assembly 33, which is similar to the ninth assembly 10, but with a number of differences. The further assembly 33 can also be used in similar manner to the ninth assembly 10. The further assembly 33 includes an elongate member 36 and a further threaded spacer 960 comprising an inner part 962 and an outer part 520 (outer part 520 not shown in Fig. 25). The head 38 of the elongate member 36 of the further assembly 33 comprises two planar faces on opposing sides of the elongate member 36, the faces being substantially perpendicular to the longitudinal axis of the elongate rigid portion 37 of the elongate member 36. In this example, the head 38 is integral with the elongate rigid portion 37 of the elongate member 36, with each planar face of the head 38 being connected to the elongate rigid portion by a 90° bend in a single sheet of material, such that each face is bent 180° relative to the other face.

In the example, of Fig. 25, the elongate rigid portion 37 of the elongate member 36 includes an elongate ridge 39 extending along at least part of the length of the elongate rigid portion 37. The ridge 39 is of increased thickness relative to the adjacent sections of the elongate rigid portion 37. The ridge 39 improves the rigidity of the elongate rigid portion 37.

The stop portion 35 of the elongate member 36 of the further assembly 33 is a projection extending outwardly from the elongate member 36. The projection may be formed by an indent or bend in the elongate member 36, or alternatively by a rivet or a nut and bolt passing through a hole in the elongate member 36.

The inner part 962 of the further threaded spacer 960 of Fig. 25 is shown in further detail in Fig. 26. The inner part 962 is similar to the inner part 210 of the second and third threaded spacers 200, 500, but with some differences. The slot 963 of the inner part 962 of Figs. 25 & 26 includes a recess 964 for locating the stop portion 35 of the elongate member 36. In the example of Figs. 25 & 26 the recess 964 is provided on both sides of the slot. Location of the stop portion 35 within the recess 964 prevents the stop portion 35 from snagging or catching on other objects when it is located in the recess 964. The outer part 520 (not shown in Figs. 25 & 26) of the further threaded spacer 960 is substantially the same as the outer part 520 of the third threaded spacer 500.

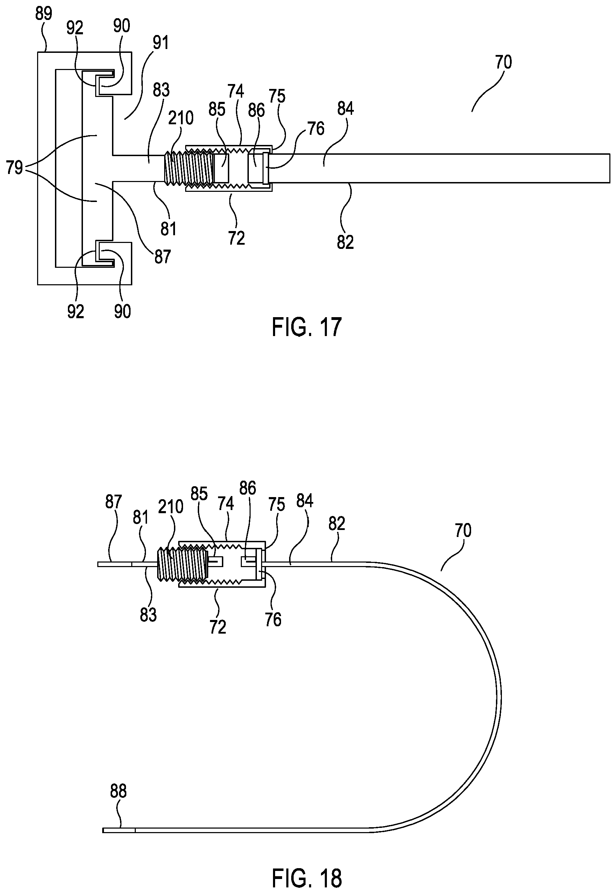

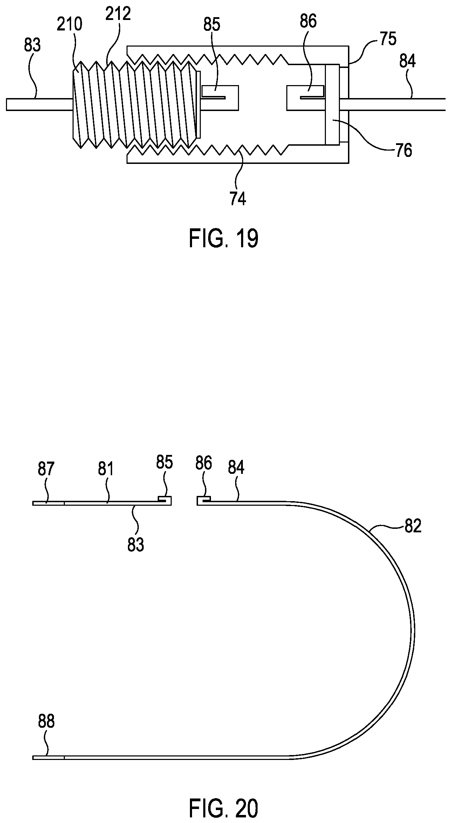

Figs. 17 to 21 illustrate a tenth assembly 70 for mounting a sign to a post, which includes first and second elongate members 81, 82, and an apparatus in the form of a tightening arrangement 72.

The first and second elongate members 81, 82 each include an elongate through portion 83, 84 and a protruding stop portion 85, 86.

The tightening arrangement 72 includes an inner part 210, an outer part 74, and an abutment member 76. In this example the inner part 210 of the tightening arrangement 72 is substantially the same as the inner part 210 of the second threaded spacer 200. However, in other examples, the inner part 110 of the first threaded spacer 100 could for instance be used.

The outer part 74 of the tightening arrangement 72, which in this example in the form of an internally threaded nut, includes an internal surface with a threaded portion for engaging with the external thread 212 of the inner part 210. The outer part 74 is configured to threadably rotate around the inner part 210.

The internal surface of the outer part 74 is an internal surface of a hole extending through the outer part 74. The hole extending through the outer part 74 has a greater extent along the screw axis than the inner part 210, such that the whole of the inner part 210 can be received within the hole. In this example, the hole extending through the outer part 74 is a through hole.

The outer part 74 includes an internal flange 75, which provides an aperture of reduced diameter relative to the remainder of the hole extending through the outer part 74, thereby preventing the abutment member 75 from moving beyond the internal flange 75. In this example, the internal flange 75 is provided at a longitudinal end of the outer part, wherein the longitudinal axis of the outer part 74 is defined by the screw axis of the internal thread of the outer part 74.

In this example, the outer surface of the outer part 74 is substantially cylindrical.

The abutment member 76 of the tightening arrangement 72 is locatable in the hole extending through the outer part 74. The abutment member 76 extends to a greater extent than the aperture defined by the internal flange 75 of the outer part 74 in a direction perpendicular to the screw axis of the threaded portion of the outer part 74, such that the abutment member 76 cannot move beyond the internal flange 75 when located in the hole extending through the outer part 74. The abutment member 76 is mountable to the through portion 84 of the second elongate member 82.

The abutment member 76 includes a slot (not shown) for receiving the through portion 84 of the second elongate member 82, which is in this example is similar to the slot 214 (not shown in Figs. 16 to 21, but shown in for example Fig. 2) in the inner part 210. The slot in the abutment member 76 is in the form of a through hole with a substantially rectangular cross section that corresponds to the longitudinal cross section of the through portion 84 of the second elongate member 82. Similarly to the slot 214 of the inner part 210, the slot of the abutment member 76 includes a side opening (also not shown), which is configured to receive the through portion 84 of the second elongate member 82 in a direction perpendicular to the longitudinal axis of the through portion 84.

In the example of Figs. 17 - 19, the abutment member 76 is in the form of a washer with a substantially rectangular slot for receiving the through portion 84 of the second elongate member 82. The abutment member 76 may be made from metal.

The through portion 83 of the first elongate member 81 has a non-circular longitudinal cross section corresponding with the non-circular cross section of the slot 214 of the inner part 210 of the tightening arrangement 72. The through portion 83 of the first elongate member 81 is a portion of the first elongate member 81 that is shaped to extend through the slot of the inner part 210 of the tightening arrangement 72. In this example, the longitudinal cross section of the through portion 83 of the first elongate member 81 is substantially rectangular.

The through portion 84 of the second elongate member 82 has a non-circular longitudinal cross section corresponding with the non-circular cross section of the slot of the abutment member 76 of the tightening arrangement 72. The through portion 84 of the second elongate member 82 is a portion of the second elongate member 82 that is shaped to extend through the slot of the abutment member 76 of the tightening arrangement 72. In this example, the longitudinal cross section of the through portion 84 of the second elongate member 82 is substantially rectangular.

The stop portion 85 of the first elongate member 81 extends to a greater extent than the slot 214 of the inner part 210 of the tightening arrangement 72 in a direction perpendicular to the screw axis of the external thread 212 of the inner part 210, such that the stop portion 85 of the first elongate member 81 is unable to move through the slot 214 of the inner part 210.

The stop portion 86 of the second elongate member 82 extends to a greater extent than the slot of the abutment member 76 of the tightening arrangement 72 in a direction perpendicular to the longitudinal axis of the through portion 84 of the second elongate member 82, such that the stop portion 86 is unable to move through the slot of the abutment member 76.

In the example of Figs. 17 - 21, each stop portion 85, 86 is in the form of a bent section, where the end section of the respective elongate member 81, 82 is folded over on itself.

The second elongate member 82 includes an elongate flexible portion 95 for wrapping around at least part of the circumference of a post (not shown). In this example, each elongate member 81, 82 is in the form of a metal band, and may be formed from a single sheet of material.

An insert 87, 88 is provided on each elongate member 81, 82 for insertion into one or more elongate channels 89 on a sign. The inserts 87, 88 are each provided at an opposite end of the respective elongate member 81, 82 to the stop portion 85, 86 of that elongate member 81, 82. The insert 87 on the first elongate member 81 and the channel 89 are best shown in Fig. 17. Such channels are often provided in road signs to enable mounting to a post, which could for instance be a lamp post. Each channel 89 includes a lip 90 on either side of the channel such that the channel 89 has a reduced size opening 91 relative to the remainder of the channel 89. In this example, the inserts 87, 88 are integral with the respective first and second elongate members 81, 82.

Each insert 87, 88 includes two arms 79, which each extend outwardly from the respective elongate member 81, 82 in a direction perpendicular to the longitudinal axis of the respective elongate member 81, 82. Each arm 79 includes a recess 92 for locating an inwardly turned end of the respective lip 90. Each insert 87, 88 is slidingly locatable in an open longitudinal end of the channel 89.

In use, the respective inserts 87, 88 are slidingly located in an open longitudinal end of the channel 89 of a sign. The elongate flexible portion 95 of the second elongate member 82 is wrapped around a sign post.

The tightening arrangement 72 is mounted to the through portions 83, 84 of the first and second elongate members 81, 82, and then tightened to urge the stop portions 85, 86 of the first and second elongate members 81, 82 towards each other, thereby securing the sign to the sign post.

The tightening arrangement 72 is mounted to the first and second elongate members 81, 82 by first locating the outer part 74 of the tightening arrangement 72 onto the through portion 84 of the second elongate member 82. The abutment member 76 is then mounted to the through portion 84 of the second elongate member 82 adjacent to the stop portion 86 of the second elongate member 82, and the inner part 210 is mounted to the through portion 83 of the first elongate member 81 adjacent to the stop portion 85 of the first elongate member 81. The outer part 74 of the tightening arrangement 72 can then be threadably located (i.e. screwed) onto the inner part 210, to tighten to tightening arrangement 72.

The tenth assembly 70 enables a sign to be readily mounted to a sign post using a minimal amount of material.

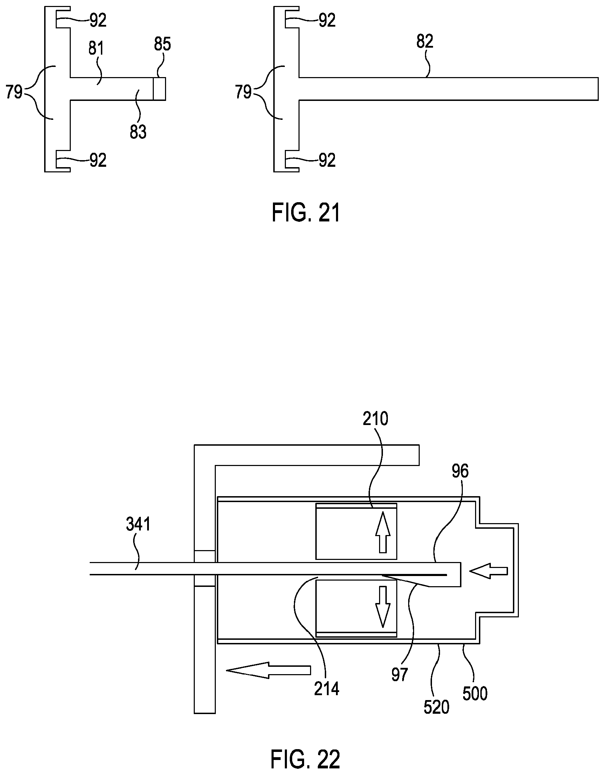

Fig. 22 schematically illustrates an alternative stop portion 96 in a layout similar to that of Fig. 5A, which shows the third threaded spacer 500. However, the alternative stop portion 98 could be utilised in any of the assemblies and with any of the apparatuses described herein.

The alternative stop portion 96 includes a tapered surface 97. The tapered surface 97 is inclined relative to a section of the elongate member 341 that is locatable inside the slot 214 of the inner part 210, i.e. relative to a through portion with a non-circular longitudinal cross section corresponding with the non-circular cross section of the slot 214 of the inner part 210 of the apparatus. The tapered surface 97 is configured to slidingly locate in the slot 214 of the inner part 210, such that when the outer part 520 is threadably rotated around the inner part 210 to urge the inner part 210 towards the stop portion 96, the inner part 210 is urged outwardly by the tapered surface 97 towards the outer part 520.

In this example, the tapered surface 97 is provided by a cutaway portion of a folded section of a rectangular cross-section metal bar.

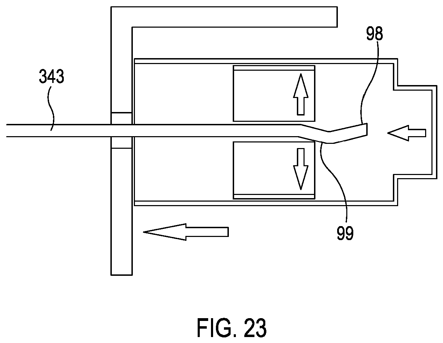

Fig. 23 schematically illustrates a similar stop portion 98 to the alternative stop portion 96 of Fig. 22, but the tapered surface 99 is provided by a three-point bend in the elongate member 343, which is a rectangular cross-section metal bar in this example. The three point bend could be utilised as a stop portion in any of the assemblies and with any of the apparatuses described herein. The three-point bend may be formed in the elongate member by a punching tool.

The urging of the inner part 210 towards the outer part 520 by the tapered surface 99 causes the threading on the inner part 210 to lock with the threading on the outer part 520. This ensures that the inner part 210 is locked in position relative to the outer part 520, even in applications where the apparatus is subject to heavy vibrations.

There is thus described an apparatus with a variety of uses. The apparatus may be utilised as a threaded spacer for use in maintaining a spacing between two surfaces and/or to urge the two surfaces apart, and used in an assembly for a variety of applications. When an elongate member of non-circular longitudinal cross section extends through a slot of a threaded spacer with a corresponding cross section, the threaded spacer can be adjusted using a single spanner.

Various modifications can be made without departing from the scope of the invention. For instance, different materials may be used or differently shaped parts may be used.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above. For instance, any of the threaded spacers described herein could be readily adapted for use in any of the assemblies described herein.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. A threaded spacer (100,200) comprising:
an inner part (110,210) including an external thread (112) and a slot (114,214) with a non-circular cross section in a plane perpendicular to the screw axis of the external thread, the slot being a through hole extending along the screw axis through the inner part, and wherein the slot is configured to locate an elongate member with a corresponding non-circular cross section, such that when located in the slot the elongate member is rotatably fixed relative to the slot; and
an outer part (120) including an internal surface (122) that comprises a threaded portion (124), wherein the outer part is configured to threadably rotate around the inner part;
wherein the slot includes an elongate opening (218) extending parallel to the screw axis, which is configured to receive the elongate member from a direction perpendicular to the screw axis of the external thread;
**characterized in that**
the internal surface of the outer part is an internal surface of a hole extending at least partially through the outer part, wherein the hole extending through the outer part has a greater extent along the screw axis than the inner part, such that the whole of the inner part can be received within the hole.

2. A threaded spacer according to claim 1, wherein the threaded spacer includes a stop part (130) for securing the outer part in position relative to the inner part.

3. A threaded spacer according to claim 2, wherein the stop part is a nut, which is threadably rotatable around the inner part.

4. A threaded spacer according to claim 2, wherein the outer part of the threaded spacer includes an external aperture (52) which extends through to the internal surface of the outer part, and wherein the aperture is configured to receive the stop part for the threaded spacer such that when the stop part for the threaded spacer is received in the aperture, the outer part is secured in position relative to the inner part by the stop part for the threaded spacer.

5. An assembly including one or more of the threaded spacers of any of the preceding claims and an elongate member configured to locate in the slot.

6. An assembly according to claim 5, wherein the elongate member includes a through portion with a non-circular cross section corresponding to the non-circular cross section of the slot.

7. An assembly according to claim 5 or 6, wherein the elongate member includes one or more stop portions which extend to a greater extent than the slot in a direction perpendicular to the screw axis, such that the one or more stop portions are unable to move through the slot.

8. An assembly according to claim 7, wherein one of the one or more stop portions is a bent section of the elongate member.

9. An assembly according to any of claims 7 or 8, wherein the hole extending through the outer part has a greater extent along the screw axis than the inner part and the stop portion combined, such that the whole of the inner part and the stop portion can be received within the hole.

10. An assembly according to any of claims 7 to 9 when dependent on claim 6, wherein the assembly further includes a brace with one or more slots through which the through portion of the elongate member can extend, and wherein the inner part of one of the one or more threaded spacers is locatable between the brace and one of the one or more stop portions.

11. An assembly according to any of claims 5 to 10, wherein a recess for locating the stop portion is provided in the slot.

## Patentansprüche

1. Mit Gewinde versehener Abstandshalter (100,200), umfassend:
ein Innenteil (110,210), das ein Außengewinde (112) und einen Schlitz (114,214) mit
einen nicht kreisförmigen Querschnitt in einer Ebene senkrecht zu der Schraubenachse des Außengewindes beinhaltet, wobei der Schlitz ein Durchgangsloch ist, das sich entlang der Schraubenachse durch das Innenteil erstreckt, und wobei der Schlitz dazu konfiguriert ist, ein längliches Element mit einem entsprechenden nicht kreisförmigen Querschnitt zu platzieren, sodass das längliche Element, wenn es in dem Schlitz platziert ist, in Bezug auf den Schlitz drehbar fixiert ist; und
ein Außenteil (120), das eine Innenfläche (122) beinhaltet, die einen Gewindeabschnitt (124) umfasst, wobei das Außenteil dazu konfiguriert ist, sich schraubbar um das Innenteil zu drehen;
wobei der Schlitz eine längliche Öffnung (218) beinhaltet, die sich parallel zu der Schraubenachse erstreckt, die dazu konfiguriert ist, das längliche Element aus einer Richtung senkrecht zu der Schraubenachse des Außengewindes aufzunehmen;
**dadurch gekennzeichnet, dass** die Innenfläche des Außenteils eine Innenfläche eines Lochs ist,
das sich zumindest teilweise durch das Außenteil erstreckt, wobei das Loch, das sich durch das Außenteil erstreckt, ein größeres Ausmaß entlang der Schraubenachse als das Innenteil aufweist, sodass das gesamte Innenteil in dem Loch aufgenommen werden kann.

2. Mit Gewinde versehener Abstandshalter nach Anspruch 1, wobei der mit Gewinde versehene Abstandshalter ein Anschlagteil (130) zum Sichern des Außenteils in Position relativ zu dem Innenteil beinhaltet.

3. Mit Gewinde versehener Abstandshalter nach Anspruch 2, wobei das Anschlagteil eine Mutter ist, die um das Innenteil schraubbar drehbar ist.

4. Mit Gewinde versehener Abstandshalter nach Anspruch 2, wobei der Außenteil des mit Gewinde versehenen Abstandshalters eine Außenöffnung (52) beinhaltet, die sich durch die Innenfläche des Außenteils erstreckt, und wobei die Öffnung dazu konfiguriert ist, das Anschlagteil für den mit Gewinde versehenen Abstandshalter so aufzunehmen, dass, wenn das Anschlagteil für den mit Gewinde versehenen Abstandshalter in der Öffnung aufgenommen ist, das Außenteil in Position relativ zu dem Innenteil durch das Anschlagteil für den mit Gewinde versehenen Abstandshalter gesichert ist.

5. Anordnung, beinhaltend einen oder mehrere der mit Gewinde versehenen Abstandshalter nach einem der vorhergehenden Ansprüche und ein längliches Element, das dazu konfiguriert ist, in dem Schlitz platziert zu sein.

6. Anordnung nach Anspruch 5, wobei das längliche Element einen Durchgangsabschnitt mit einem nicht kreisförmigen Querschnitt beinhaltet, der dem nicht kreisförmigen Querschnitt des Schlitzes entspricht.

7. Anordnung nach Anspruch 5 oder 6, wobei das längliche Element einen oder mehrere Anschlagabschnitte beinhaltet, die sich in einer Richtung senkrecht zu der Schraubenachse in einem größeren Ausmaß als der Schlitz erstrecken, sodass der eine oder die mehreren Anschlagabschnitte nicht in der Lage sind, sich durch den Schlitz zu bewegen.

8. Anordnung nach Anspruch 7, wobei einer von dem einen oder den mehreren Anschlagabschnitten eine gebogene Sektion des länglichen Elements ist.

9. Anordnung nach einem der Ansprüche 7 oder 8, wobei das Loch, das sich durch das Außenteil erstreckt, ein größeres Ausmaß entlang der Schraubenachse als das Innenteil und der Anschlagabschnitt kombiniert aufweist, sodass das gesamte Innenteil und der Anschlagabschnitt in dem Loch aufgenommen werden können.

10. Anordnung nach einem der Ansprüche 7 bis 9, wenn abhängig von Anspruch 6, wobei die Anordnung ferner eine Strebe mit einem oder mehreren Schlitzen beinhaltet, durch die sich der Durchgangsabschnitt des länglichen Elements erstrecken kann, und wobei das Innenteil von einem von dem einen oder den mehreren mit Gewinde versehenen Abstandshaltern zwischen der Strebe und einem von dem einen oder den mehreren Anschlagabschnitten platziert werden kann.

11. Anordnung nach einem der Ansprüche 5 bis 10, wobei eine Aussparung zum Anordnen des Anschlagabschnitts in dem Schlitz bereitgestellt ist.

## Revendications

1. Entretoise filetée (100, 200) comprenant :
une pièce intérieure (110,210) comprenant un filetage externe (112) et une fente (114,214) avec une section transversale non circulaire dans un plan perpendiculaire à l'axe de vis du filetage externe, la fente étant un trou traversant s'étendant le long de l'axe de vis à travers la pièce intérieure, et dans laquelle la fente est conçue pour placer un élément allongé avec une section transversale non circulaire correspondante, de sorte que lorsqu'il est placé dans la fente, l'élément allongé est fixé de manière rotative par rapport à la fente ; et
une pièce extérieure (120) comprenant une surface interne (122) qui comprend une partie filetée (124), dans laquelle la pièce extérieure est conçue pour tourner par filetage autour de la pièce intérieure ;
dans laquelle la fente comprend une ouverture allongée (218) s'étendant parallèlement à l'axe de vis, qui est conçue pour recevoir l'élément allongé en provenance d'une direction perpendiculaire à l'axe de vis du filetage externe ;
**caractérisée en ce que**
la surface interne de la pièce extérieure est une surface interne d'un trou s'étendant au moins partiellement à travers la pièce extérieure, dans laquelle le trou s'étendant à travers la pièce extérieure présente une étendue plus grande le long de l'axe de vis que la pièce intérieure, de sorte que la totalité de la pièce intérieure puisse être reçue au sein du trou.

2. Entretoise filetée selon la revendication 1, dans laquelle l'entretoise filetée comprend une pièce d'arrêt (130) pour fixer la pièce extérieure en position par rapport à la pièce intérieure.

3. Entretoise filetée selon la revendication 2, dans laquelle la pièce d'arrêt est un écrou, qui peut tourner par filetage autour de la pièce intérieure.

4. Entretoise filetée selon la revendication 2, dans laquelle la pièce extérieure de l'entretoise filetée comprend une ouverture externe (52) qui s'étend à travers la surface interne de la pièce extérieure, et dans laquelle l'ouverture est conçue pour recevoir la pièce d'arrêt pour l'entretoise filetée de sorte que lorsque la pièce d'arrêt pour l'entretoise filetée est reçue dans l'ouverture, la pièce extérieure est fixée en position par rapport à la pièce intérieure par la pièce d'arrêt pour l'entretoise filetée.

5. Ensemble comprenant une ou plusieurs des entretoises filetées de l'une quelconque des revendications précédentes et un élément allongé conçu pour se placer dans la fente.

6. Ensemble selon la revendication 5, dans lequel l'élément allongé comprend une partie traversante avec une section transversale non circulaire correspondant à la section transversale non circulaire de la fente.

7. Ensemble selon la revendication 5 ou 6, dans lequel l'élément allongé comprend une ou plusieurs parties d'arrêt qui s'étendent sur une plus grande étendue que la fente dans une direction perpendiculaire à l'axe de vis, de sorte que les une ou plusieurs parties d'arrêt sont incapables de se déplacer à travers la fente.

8. Ensemble selon la revendication 7, dans lequel une des une ou plusieurs parties d'arrêt est une section courbée de l'élément allongé.

9. Ensemble selon l'une quelconque des revendications 7 ou 8, dans lequel le trou s'étendant à travers la pièce extérieure présente une étendue plus grande le long de l'axe de vis que la pièce intérieure et la partie d'arrêt combinées, de sorte que la totalité de la pièce intérieure et de la partie d'arrêt puisse être reçue au sein du trou.

10. Ensemble selon l'une quelconque des revendications 7 à 9 lorsqu'elles dépendent de la revendication 6, dans lequel l'ensemble comprend en outre une cale avec une ou plusieurs fentes à travers lesquelles la partie traversante de l'élément allongé peut s'étendre, et dans lequel la pièce intérieure de l'une des une ou plusieurs entretoises filetées peut être placée entre la cale et l'une des une ou plusieurs parties d'arrêt.

11. Ensemble selon l'une quelconque des revendications 5 à 10, dans lequel un évidement pour placer la partie d'arrêt est ménagé dans la fente.
